# EUROPEAN PATENT SPECIFICATION

(11) **EP 4 432 041 B1**
(45) Date of publication and mention of the grant of the patent: **18.02.2026**
(21) Application number: 24162861.9
(22) Date of filing: 12.03.2024
(51) Int. Cl.: G05D 1/249, G05D 1/633, G05D 105/45, G05D 107/70, G05D 109/10, G05D 111/10, G05D 1/698

(54) **SYSTEM AND METHOD OF REMOTELY CONTROLLING A MOBILE VEHICLE**
SYSTEM UND VERFAHREN ZUR FERNSTEUERUNG EINES BEWEGLICHEN FAHRZEUGS
SYSTÈME ET PROCÉDÉ DE COMMANDE A DISTANCE DE VÉHICULE MOBILE

(30) Priority: 17.03.2023 JP 2023042663
(43) Date of publication of application: 18.09.2024
(73) Proprietor: TOYOTA JIDOSHA KABUSHIKI KAISHA, Toyota-shi, Aichi-ken, 471-8571 (JP)
(72) Inventor: IWAHORI, Kento, Toyota-Shi, Aichi-Ken, 471-8571 (JP); SAWANO, Takuro, Toyota-Shi, Aichi-Ken, 471-8571 (JP); YOKOI, Yuka, Toyota-Shi, Aichi-Ken, 471-8571 (JP); YOKOYAMA, Daiki, Toyota-Shi, Aichi-Ken, 471-8571 (JP)
(74) Representative: Cabinet Beau de Loménie

(56) References cited:
- EP-A1- 3 616 996
- JP-A- 2008 065 381
- US-A1- 2019 344 706

## Description

### CROSS-REFERENCE TO RELATED APPLICATIONS

The present application claims priority from Japanese patent application P2023-42663 filed on March 17, 2023, to the disclosure of which the person of the art can refer to when considering the present disclosure.

### BACKGROUND

### FIELD

The present disclosure relates to a controller, a system, and a method of controlling a moving object.

### RELATED ART

Japanese Patent Application Publication (Translation of PCT Application) No. 2017-538619 discloses a technique of causing a vehicle to run automatically by remote control in a step of manufacturing the vehicle.

Various types of persons may approach an area where a moving object moves by remote control. Regarding a factory where a moving object moves, for example, not only an experienced person having a relatively high handling level responsive to the moving object but also a person having a relatively low handling level such as an inexperienced person or a visitor comes into and out of the area. This arises a desire for a technique of controlling the moving object more properly on the assumption that various types of persons approach the area where the moving object is to move.
JP 2008 065381 A discloses a vehicle with outside user protecting function
EP 3 616 996 A1 discloses a method and a device for providing feedback to outside of a vehicle.
Japanese patent application P2023-42663 discloses a controller used in a system that moves a moving object by remote control.

### SUMMARY

The present disclosure is feasible in the following aspects.
(1) According to a first aspect of the present disclosure, a system as defined in claim 1 is provided.
   According to this aspect, if the target person is detected in the system, it is possible to change the moving object likely to approach the detected target person to the alert mode. Thus, in an area likely to be approached by various types of persons, it is possible to move the moving object more properly by remote control.
(2) In the controller according to the above-described aspect, the moving object specification unit may specify the moving object likely to approach the target person by implementing at least one of specification of the moving object moving in a building where the target person is present, specification of the moving object approaching the target person, and specification of the moving object at a distance equal to or less than a predetermined distance from the target person. This aspect allows the moving object likely to approach the target person to be specified properly.
(3) In the controller according to the above-described aspect, the signal transmission unit may transmit a signal for reducing a moving speed of the moving object as the control signal. According to this aspect, by reducing a moving speed of the moving object in the alert mode, it becomes possible for the moving object to give an alert against the target person.
(4) In the controller according to the above-described aspect, the signal transmission unit may transmit at least either a signal for increasing the quantity of light being emitted from the moving object or a signal for increasing the volume of sound emitted from the moving object as the control signal. According to this aspect, by increasing the quantity of light or the volume of sound emitted from the moving object in the alert mode, it becomes possible for the moving object to give an alert against the target person.
(5)
(6) According to the above-described aspect, the sensor for remote control is applicable further to detection of the target person.
(7) In the system according to the above-described aspect, the sensor for remote control may be composed of a camera that captures an image used for determining the location of the moving object. According to this aspect, the camera used for remote control over the moving object is further applicable to detection of the target person.
(8) In the system according to the above-described aspect, the first detection unit may detect the target person on the basis of the captured image acquired by the camera, and a learning model having learned about whether a person satisfying a predetermined condition is in an input image. According to this aspect, it is possible to detect the target person more properly using the captured image and the learning model.
(9) In the system according to the above-described aspect, the whereabouts determination unit may determine the whereabouts on the basis of the detection result of the target person and location information about the sensor for remote control. According to this aspect, it is possible to determine the whereabouts of the target person simply using the location information about the sensor for remote control.
(10) In the system according to the above-described aspect, the moving object may be a vehicle, the remote control unit may cause the moving object to run between a first place and a second place in a factory for manufacture of the moving object by implementing the remote control, and a first step relating to manufacture of the moving object may be performed at the first place and a second step as a step subsequent to the first step may be performed at the second place. According to this aspect, it is possible to move the moving object by remote control efficiently between places for implementations of respective steps relating to manufacture of the moving object. Furthermore, if various types of persons come into and out of the factory for manufacture of the moving object, it is possible to cause the moving object to run more properly by remote control in the factory.
(11) In the system according to the above-described aspect, the moving object may include a second detection unit that detects a situation around the moving object, and the signal transmission unit may transmit a signal for increasing the sensitivity of detection by the second detection unit as the control signal. According to this aspect, by increasing the sensitivity of detection by the second detection unit provided at the moving object in the alert mode, it becomes possible for the moving object to give an alert against the target person.
(12) In the system according to the above-described aspect, the moving object may include a state changing unit that performs a changing process of changing a driving state of the moving object when the second detection unit detects a target person, and the changing process may include at least any of a process of reducing a moving speed of the moving object, a process of increasing the quantity of light emitted from the moving object, and a process of increasing the volume of sound emitted from the moving object. This aspect allows a vehicle to detect the target person by itself using the second detection unit and to perform the changing process by itself if the vehicle detects the target person.
(13) In the system according to the above-described aspect, when a person becomes undetected by the second detection unit after implementation of the changing process, the state changing unit may perform a process of releasing a state where the driving state is changed by the changing process. According to this aspect, if a person as a detection target becomes undetected by the second detection unit after implementation of the changing process, it is possible for the moving object to release by itself the state in which the driving state of the moving object is changed.

The present disclosure is feasible in various aspects other than the above-described controller and system. For example, the present disclosure may be realized in aspects including a moving object and a method of controlling a moving object.

### BRIEF DESCRIPTION OF THE DRAWINGS

Fig. 1 is an explanatory view showing a schematic configuration of a system according to a first embodiment;
Fig. 2A shows automatic driving control over a vehicle according to the first embodiment;
Fig. 2B is a flowchart showing a running method of causing the vehicle to run according to the first embodiment;
Fig. 3 is a flowchart of a detection process;
Fig. 4 is a flowchart of an alert instruction process according to the first embodiment;
Fig. 5 is a schematic view showing the alert instruction process according to the first embodiment;
Fig. 6 is a flowchart of an alert process according to the first embodiment;
Fig. 7 is a schematic view showing an alert instruction process according to a second embodiment;
Fig. 8 shows automatic driving control over a vehicle according to a third embodiment;
Fig. 9 is a schematic view showing an alert instruction process according to the third embodiment;
Fig. 10 is a schematic view showing an alert instruction process according to a fourth embodiment;
Fig. 11 is a schematic view showing an alert instruction process according to a fifth embodiment;
Fig. 12 is an explanatory view showing a schematic configuration of a system according to a sixth embodiment;
Fig. 13 is a flowchart of an alert process according to the sixth embodiment;
Fig. 14 is a schematic view showing the alert process according to the sixth embodiment;
Fig. 15 is an explanatory view showing a schematic configuration of a system according to a seventh embodiment; and
Fig. 16 is a flowchart showing a running method of causing a vehicle to run according to the seventh embodiment.

### DETAILED DESCRIPTION

### A. First Embodiment

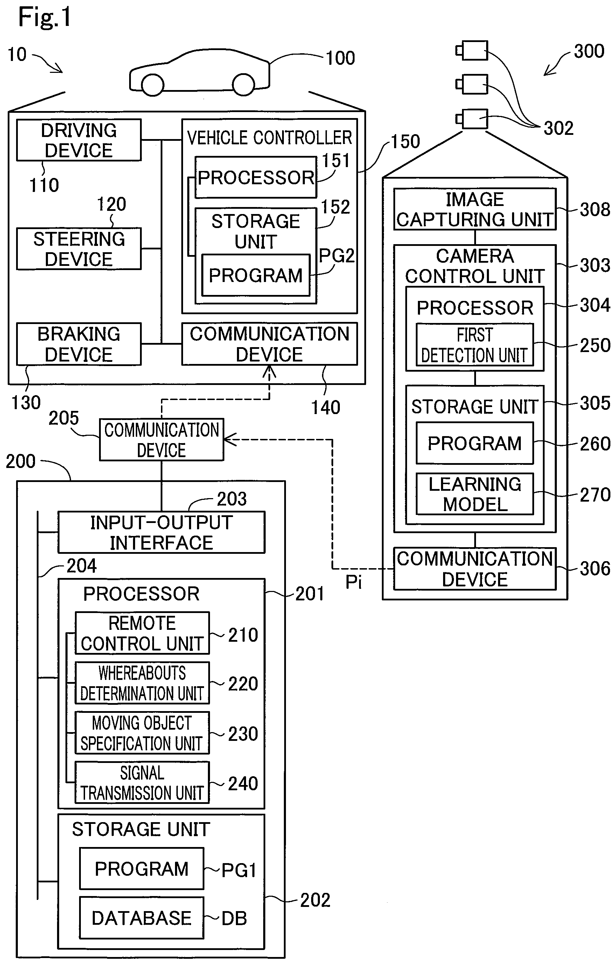

Fig. 1 is an explanatory view showing a schematic configuration of a system 10 according to a first embodiment. As will be described later, in the present embodiment, the system 10 is used for moving a moving object by remote control in a factory for manufacture of the moving object. The moving object of the present embodiment is a vehicle 100, more specifically, a battery electric vehicle (BEV). The moving object is not limited to a battery electric vehicle but may be different types of vehicle such as a gasoline automobile, a hybrid automobile, or a fuel cell automobile, for example. The moving object may be a vehicle with a wheel or may be a vehicle with a caterpillar track, and may be any type of vehicle such as a passenger car, a truck, a bus, a two-wheel vehicle, a four-wheel vehicle, a combat vehicle, or a vehicle for construction, for example. In the present specification, a state finished as a product, and a state as a semifinished product and a state as an in-process item during manufacture are collectively called a "vehicle." The moving object is not limited to a vehicle but may be a mobile robot or an electric vertical takeoff and landing aircraft (so-called flying-automobile), for example.

The system 10 of the present embodiment includes the vehicle 100 as the moving object described above, a controller 200, and a vehicle determination unit 300.

The vehicle 100 includes a driving device 110 for accelerating the vehicle 100, a steering device 120 for changing a traveling direction of the vehicle 100, a braking device 130 for decelerating the vehicle 100, a communication device 140 for communicating with the controller 200 by radio communication, and a vehicle controller 150 for controlling each part of the vehicle 100. In the present embodiment, the driving device 110 includes a battery, a motor to be driven by electric power from the battery, and a drive wheel to be rotated by the motor. The vehicle controller 150 includes one or more electronic control units (ECUs). The vehicle controller 150 includes a processor 151, a storage unit 152, an input-output interface, and an internal bus. The processor 151, the storage unit 152, and the input-output interface are connected via the internal bus in a manner allowing bidirectional communication therebetween. The processor 151 of the vehicle controller 150 executes a program PG2 stored in the storage unit 152 to realize various functions. A target of control by the vehicle controller 150 includes various types of equipment such as a light, a horn, and a sensor provided at the vehicle 100, for example, in addition to the above-described driving device 110, steering device 120, braking device 130, and communication device 140.

The vehicle determination unit 300 has a plurality of cameras 302 used for remote control over the vehicle 100. The cameras 302 each include an image capturing unit 308 with an imaging element and an optical system for acquiring a captured image Pi, and a camera control unit 303 that controls the image capturing unit 308. The camera control unit 303 is composed of a computer including a processor 304, a storage unit 305, and an input-output interface (not shown in the drawings). The storage unit 305 stores a detection program 260 and a learning model 270. A communication device 306 for communicating with the controller 200 is connected to the input-output interface of the camera control unit 303. The communication device 306 communicates with the communication device 205 to transmit the captured image Pi to the controller 200.

The camera 302 functions as a sensor for remote control. The sensor for remote control is a sensor used for remote control over the vehicle 100 and for determining the location of a moving object. More specifically, the camera 302 captures an image as the captured image Pi for determining the location of the vehicle 100. Then, as will be described later, the captured image Pi is analyzed by the controller 200 to determine the location or position of the vehicle 100. Remote control over the vehicle 100 may be implemented using various types of vehicle-mounted cameras mounted on the vehicle 100 or various types of sensors such as light detection and ranging (LiDAR), a millimeter wave radar, an ultrasonic wave sensor, and an infrared sensor supplementarily, for example. In this case, these vehicle-mounted cameras or sensors are available for adjusting an inter-vehicular distance, for example. In other embodiments, as long as the sensor for remote control is available for determining the location or position of the vehicle 100, the sensor for remote control may be composed of a detector such as LiDAR, a millimeter wave radar, an ultrasonic wave sensor, or an infrared sensor in addition to the camera 302 or instead of the camera 302.

The camera control unit 303 of the present embodiment becomes functional as a first detection unit 250 in response to execution of the detection program 260 by the processor 304. The first detection unit 250 detects a target person. In the present embodiment, the first detection unit 250 detects a person satisfying a predetermine detection condition as the target person. The detection condition is defined as a condition allowing detection of a person having a relatively low handling level responsive to the vehicle 100 running in the factory by remote control, for example.

In the present embodiment, the camera control unit 303 detects the target person on the basis of the captured image Pi. More specifically, the camera control unit 303 inputs the captured image Pi to the learning model 270 to judge whether the target person is in the captured image Pi. The learning model 270 is a model having learned about whether a person satisfying the detection condition is in an image input to the learning model 270, for example. The learning model 270 is various types of neural networks, a support vector machine, or a random forest, for example, and is generated using any machine learning algorithm such as supervised learning, unsupervised learning, or enforced learning, for example. In other embodiments, the first detection unit 250 may detect the target person using a rule-based model, for example, instead of the learning model 270.

The detection condition is defined as a condition allowing detection of an inexperienced person, a visitor, or a person in poor health, for example. In this case, the detection condition may be defined as a condition allowing the inexperienced person, etc. to be detected directly, or may be defined as a condition about clothes, a face, a physical attribute, the presence or absence of an identification mark (badge, for example), or a behavior pattern, for example, to allow the inexperienced person, etc. to be detected indirectly. For example, the detection condition for detecting the inexperienced person is fulfilled by being an inexperienced person, being not an experienced person, not wearing clothes or a badge to be worn only by an experienced person, or a low degree of match with a feature in the face of an experienced person registered in advance. As another example, the detection condition for detecting a visitor having come to see a factory FC is fulfilled by being a visitor, being a child, wearing clothes or a badge for visitors, or a high degree of match with a feature in the face of a visitor registered in advance, for example. Whether a person is a child or not may be judged on the basis of a body height, for example. Furthermore, the detection condition for detecting a person in poor health is fulfilled by being a person in poor health, the presence of an abnormal behavior pattern in the behavior of a person, or a parameter indicating wobbling of a person going out of a predetermined normal range, for example.

The controller 200 is composed of a computer including a processor 201, a storage unit 202, an input-output interface 203, and an internal bus 204. The processor 201, the storage unit 202, and the input-output interface 203 are connected via the internal bus 204 in a manner allowing bidirectional communication therebetween. The communication device 205 for communicating with the vehicle 100 and the vehicle determination unit 300 by radio communication is connected to the input-output interface 203. The storage unit 202 stores a PG1 and a database DB. The controller 200 realizes various functions including those as a remote control unit 210, a whereabouts determination unit 220, a moving object specification unit 230, and a signal transmission unit 240 in response to execution of the program PG1 by the processor 201. The database DB is a database storing identification information and installation location information that are provided for each sensor for remote control and associated with each other for each sensor for remote control. Specifically, the database DB of the present embodiment is a database storing identification information and installation location information that are provided for each camera 302 and associated with each other for each camera 302.

The remote control unit 210 causes the vehicle 100 to run by controlling the vehicle 100 remotely, as will be described later.

If the first detection unit 250 detects a target person, the whereabouts determination unit 220 determines whereabouts of the target person on the basis of a detection result of the target person by the first detection unit 250.

The moving object specification unit 230 specifies a moving object being controlled under remote control and likely to approach the detected target person on the basis of the whereabouts determined by the whereabouts determination unit 220. The "approach" mentioned herein includes not only a case where the moving object moves closer to the target person but also a case where the target person moves closer to the moving object. In the following, the vehicle 100 to be specified by the moving object specification unit 230 as a moving object likely to approach the target person will also be called a target vehicle.

The signal transmission unit 240 transmits a control signal to the moving object specified by the moving object specification unit 230 for changing a driving mode of the moving object to an alert mode. The alert mode is a driving mode for giving an alert against the target person. More specifically, the moving object in the alert mode gives an alert against an approach between the moving object and the target person. The foregoing target vehicle is also said to be the vehicle 100 as a target of transmission of the control signal. The target person is also said to be a person as a target of an alert by the target vehicle. In the following, a driving mode of the vehicle 100 before the change to the alert mode will also be called a normal mode.

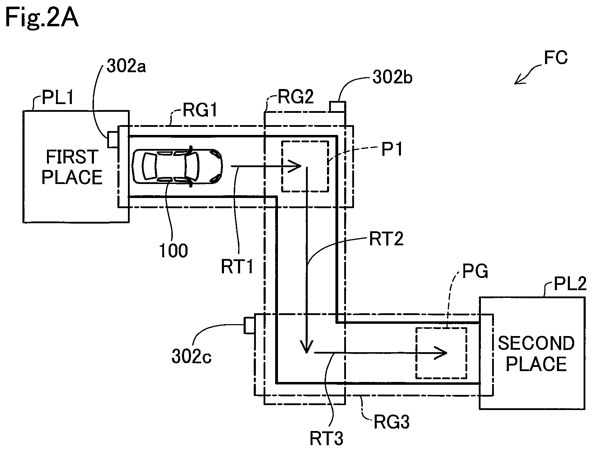

Fig. 2A shows automatic driving control over the vehicle 100 by remote control. Fig. 2A shows how automatic driving of the vehicle 100 is controlled in the factory FC where the vehicle 100 is produced. The factory FC includes a first place PL1 for implementation of a first step relating to manufacture of the vehicle 100, and a second place PL2 for implementation of a second step relating to manufacture of the vehicle 100. The second step is a step subsequent to the first step. For example, the first step is an assembly step of assembling the vehicle 100 and the second step is an inspection step of inspecting the vehicle 100. The first place PL1 and the second place PL2 may be provided in the same building or in different buildings at the same site. The first place PL1 and the second place PL2 may be provided outdoors, not indoors. The first place PL1 and the second place PL2 may be provided separately in a plurality of sites and may be provided separately in a first factory and a second factory next to each other across a public road or a private road, for example. In this case, the first factory and the second factory are called the factory FC collectively and a track RT may include a part of the public road or a part of the private road.

In other embodiments, the first step or the second step may not have to be an assembly step or an inspection step. As long as the vehicle 100 after being subjected to the first step is capable of running by remote control, the first step and the second step may be various types of steps relating to manufacture of the vehicle 100. In the present embodiment, implementation of the first step on the vehicle 100 brings the vehicle 100 to a state capable of running by remote control. More specifically, the state where the vehicle 100 is capable of running by remote control means a state where the vehicle 100 is capable of fulfilling three functions including run, turn, and stop by remote control, which corresponds to a state where the vehicle 100 is equipped with the driving device 110, the steering device 120, the braking device 130, the communication device 140, and the vehicle controller 150 in the present embodiment.

The vehicle 100 runs along the track RT by remote control, thereby running between the first place PL1 and the second place PL2. In the illustration in Fig. 2A, the track RT is a track connecting the first place PL1 and the second place PL2 to each other, and includes a first track RT1, a second track RT2, and a third track RT3 continuous with each other. In the illustration in Fig. 2A, the controller 200 functioning as the remote control unit 210 causes the vehicle 100 to run along the track RT from the first place PL1 to a loading location PG for loading into the second step. The loading location PG is provided along the track RT and in front of the second place PL2. In other embodiments, the track RT may not have to be a series of tracks such as that shown in Fig. 2A but may be a track branching into a plurality of tracks along the way and then merging into one again, for example.

The above-described camera 302 acquires an image of the track RT viewed from above. The number of the cameras 302 and the arrangement of the cameras 302 are set by giving consideration to angles of view of the cameras 302, for example, in such a manner as to allow image capturing of the track RT entirely. In the illustration in Fig. 2A, the camera 302 includes a camera 302a allowing image capturing of a range RG1 covering the first track RT1 entirely, a camera 302b allowing image capturing of a range RG2 covering the second track RT2 entirely, and a camera 302c allowing image capturing of a range RG3 covering the third track RT3 entirely. The camera 302 may acquire not only an image captured from above the vehicle 100 but also an image captured from the front, back, or side of the vehicle 100, for example. Cameras for acquiring such images may be used in combination, as appropriate.

The track RT has a target route set in advance as a route along which the vehicle 100 is to run. The controller 200 functioning as the remote control unit 210 analyzes images of the track RT and the vehicle 100 in the captured image Pi at a predetermined time interval. By analyzing the captured image Pi in this way, the controller 200 acquires the location or position of the vehicle 100 relative to the target route in real time. The controller 200 generates a control command for causing the vehicle 100 to run along the target route in response to the acquired location or position of the vehicle 100, and transmits the control command to the vehicle 100. The vehicle controller 150 provided at the vehicle 100 controls the driving device 110, the steering device 120, and the braking device 130 in response to the control command received from the controller 200, thereby causing the vehicle 100 to run. In the present embodiment, the controller 200 is capable of remotely controlling a plurality of the vehicles 100 simultaneously in a parallel fashion. If the controller 200 remotely controls a plurality of the vehicles 100 simultaneously in a parallel fashion, the controller 200 transmits a control command to each of the vehicles 100 that is responsive to a target route, and a current location and a current position of this vehicle 100. For the remote control, an image of the entire vehicle 100 may be used or an image of a part of the vehicle 100 (an image of an alignment mark given to the vehicle 100, for example) may be used.

The cameras 302 are configured in such a manner that, at a connecting location between tracks such as a location P1 shown in Fig. 2A, the angles of view of the cameras 302 corresponding to the respective connected tracks overlap each other. In the example of the location P1, the angle of view of the camera 302a corresponding to the first track RT1 and the angle of view of the camera 302b corresponding to the second track RT2 overlap each other. The controller 200 controls the vehicle 100 remotely while switching the camera 302 to be used for the remote control in response to a location of running of the vehicle 100 along the track RT. More specifically, when the vehicle 100 runs along the first track RT1 to move from the first place PL1 to the location P1, remote control using the captured image Pi acquired by the camera 302a is implemented. When the vehicle 100 arrives at the location P1, switch is made to remote control using the captured image Pi acquired by the camera 302b and the vehicle 100 runs along the second track RT2 by remote control using the captured image Pi acquired by the camera 302b. Likewise, the captured image Pi acquired by the camera 302c is used for running along the third track RT3.

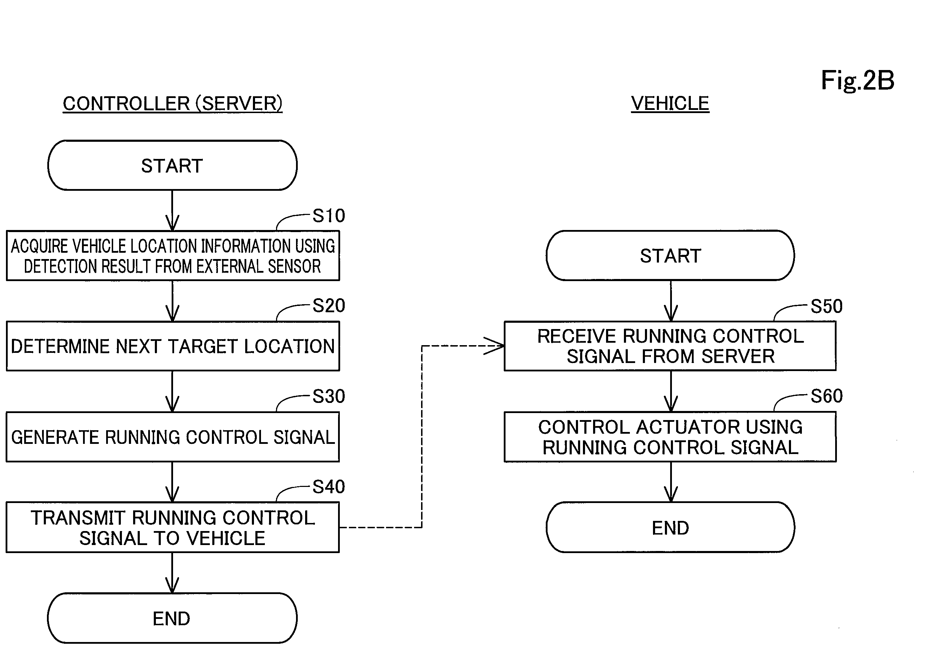

Fig. 2B is a flowchart showing a running method of causing the vehicle to run according to the present embodiment. In the running method of causing the vehicle 100 to run according to the present embodiment, the controller 200 functions as a server to cause the vehicle 100 to run by remote control. In step S10, the remote control unit 210 acquires vehicle location information using detection result output from an external sensor. The external sensor is located outside the vehicle 100. The vehicle location information is locational information as a basis for generating a running control signal. In the present embodiment, the vehicle location information includes the location and orientation of the vehicle 100 in a reference coordinate system of the factory FC. In the present embodiment, the reference coordinate system of the factory FC is a global coordinate system and a location in the factory FC can be expressed by X, Y, and Z coordinates in the global coordinate system. In the present embodiment, the external sensor is a camera that is disposed in the factory FC and outputs a captured image as detection result. In step S10, the remote control unit 210 acquires the vehicle location information using the captured image acquired from the camera as the external sensor.

More specifically, in step S10, the remote control unit 210 for example, determines the outer shape of the vehicle 100 from the captured image Pi, calculates the coordinates of a positioning point of the vehicle 100 in a coordinate system of the captured image Pi, namely, in a local coordinate system, and converts the calculated coordinates to coordinates in the global coordinate system, thereby acquiring the location of the vehicle 100. The outer shape of the vehicle 100 in the captured image Pi may be detected by inputting the captured image Pi to a detection model using artificial intelligence, for example. The detection model is prepared in the system 10 or outside the system 10. The detection model is stored in advance in the storage unit 202, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label.

In step S10, the remote control unit 210 can acquire the orientation of the vehicle 100 through estimation based on the direction of a motion vector of the vehicle 100 detected from change in location of a feature point of the vehicle 100 between frames of the captured images Pi using optical flow process, for example. The orientation of the vehicle 100 may be calculated using output result from an internal sensor that may be an acceleration sensor or a yaw rate sensor mounted on the vehicle 100, for example. The internal sensor is a sensor mounted on the vehicle 100.

In step S20, the remote control unit 210 determines a target location to which the vehicle 100 is to move next. In the present embodiment, the target location is expressed by X, Y, and Z coordinates in the global coordinate system. The memory of the remote control unit 210 contains a reference route stored in advance as a route along which the vehicle 100 is to run. The route is expressed by a node indicating a departure place, a node indicating a way point, a node indicating a destination, and a link connecting nodes to each other. The remote control unit 210 determines the target location to which the vehicle 100 is to move next using the vehicle location information and the reference route. The remote control unit 210 determines the target location on the reference route ahead of a current location of the vehicle 100.

In step S30, the remote control unit 210 generates a running control signal for causing the vehicle 100 to run toward the determined target location. In the present embodiment, the running control signal includes an acceleration and a steering angle of the vehicle 100 as parameters. The remote control unit 210 calculates a running speed of the vehicle 100 from transition of the location of the vehicle 100 and makes comparison between the calculated running speed and a target speed of the vehicle 100 determined in advance. If the running speed is lower than the target speed, the remote control unit 210 generally determines an acceleration in such a manner as to accelerate the vehicle 100. If the running speed is higher than the target speed as, the remote control unit 210 generally determines an acceleration in such a manner as to decelerate the vehicle 100. If the vehicle 100 is on the reference route, remote control unit 210 determines a steering angle and an acceleration in such a manner as to prevent the vehicle 100 from deviating from the reference route. If the vehicle 100 is not on the reference route, in other words, if the vehicle 100 deviates from the reference route, the remote control unit 210 determines a steering angle and an acceleration in such a manner as to return the vehicle 100 to the reference route. In other embodiments, the running control signal may include the speed of the vehicle 100 as a parameter instead of or in addition to the acceleration of the vehicle 100.

In step S40, the remote control unit 210 transmits the generated running control signal to the vehicle 100. The remote control unit 210 repeats the acquisition of vehicle location information, the determination of a target location, the generation of a running control signal, the transmission of the running control signal, and others in a predetermined cycle.

In step S50, the vehicle controller 150 of the vehicle 100 receives the running control signal transmitted from the remote control unit 210. In step S60, the vehicle controller 150 controls an actuator of the vehicle 100 using the received running control signal, thereby causing the vehicle 100 to run at the acceleration and the steering angle indicated by the running control signal. The vehicle 100 repeats the reception of a running control signal and the control over the actuator in a predetermined cycle. According to the system 10 in the present embodiment, it becomes possible to move the vehicle 100 without using a transport unit such as a crane or a conveyor.

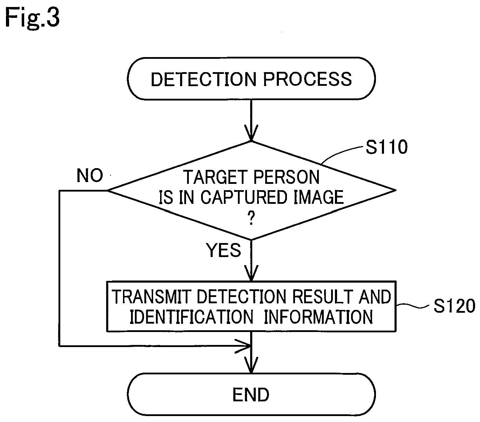

Fig. 3 is a flowchart of a detection process according to the present embodiment. In the present embodiment, the detection process is performed at a predetermined time interval by the camera control unit 303 of each camera 302. A method of controlling a moving object according to the present embodiment is realized by the detection process, and an alert instruction process and an alert process described later.

In step S110, the camera control unit 303 functioning as the first detection unit 250 detects the presence or absence of a target person in the captured image Pi acquired by the camera 302 to which the camera control unit 303 belongs. If the target person is detected in the captured image Pi in step S110, the camera control unit 303 transmits a detection result indicating the presence of the target person in the captured image Pi and identification information about the camera 302 to which the camera control unit 303 belongs together to the controller 200 in step S120.

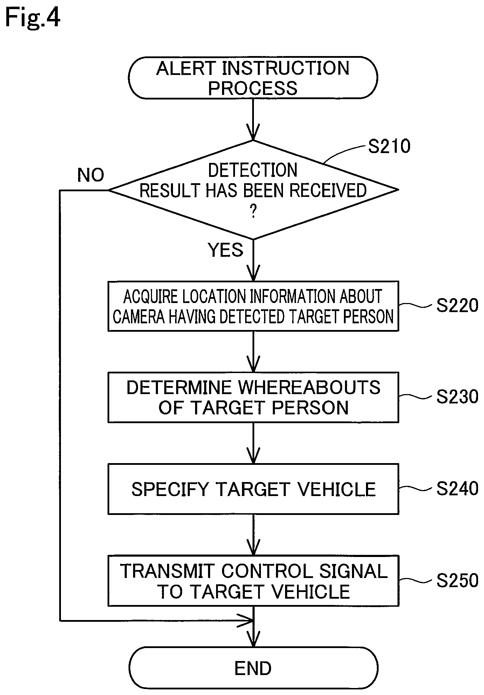

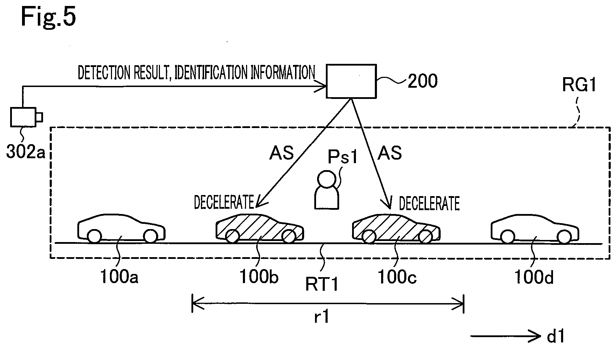

Fig. 4 is a flowchart of an alert instruction process according to the present embodiment. Fig. 5 is a schematic view showing the alert instruction process according to the present embodiment. In the present embodiment, the alert instruction process shown in Fig. 4 is performed at a predetermined time interval by the controller 200. Fig. 5 shows an example of the alert instruction process in which a child Ps1 is detected as a target person. Fig. 5 schematically shows a situation around the first track RT1. In Fig. 5, the child Ps1 is standing beside the first track RT1 in the range RG1. In Fig. 5, a vehicle 100a, a vehicle 100b, a vehicle 100c, and a vehicle 100d are shown as the vehicle 100. The vehicles 100a, 100b, 100c, and 100d are aligned in this order as viewed from the back in a traveling direction d1 of the vehicle 100 along the first track RT1.

In step S210, the controller 200 judges whether the detection result of the target person has been received from the camera control unit 303 of any of the cameras 302. If the detection result is judged to have been received, in step S220, the controller 200 acquires location information about the camera 302 having detected the target person on the basis of identification information received together with the detection result. More specifically, in step S220, the controller 200 refers to the database DB in the storage unit 202 on the basis of the identification information to acquire the location information about the camera 302 having detected the target person. In the illustration in Fig. 5, the controller 200 acquires location information about the camera 302a.

In step S230, the controller 200 functioning as the whereabouts determination unit 220 determines whereabouts of the target person on the basis of the detection result of the target person and the location information about the camera 302 acquired in step S220. More specifically, in step S230 of the present embodiment, the controller 200 analyzes the captured image Pi, and determines the location coordinates of the target person on the basis of results of the analysis on the captured image Pi and the location information about the camera 302. In the illustration in Fig. 5, the controller 200 determines the location coordinates of the child Ps1 on the basis of results of the analysis on the captured image Pi acquired by the camera 302a and the location information about the camera 302a.

In step S240, on the basis of the whereabouts of the target person determined in step S230, the controller 200 functioning as the moving object specification unit 230 specifies the vehicle 100 (target vehicle) likely to approach the target person. A process of specifying a moving object such as step S240 is also called a moving object specification process. In the present embodiment, the controller 200 specifies the target vehicle in step S240 by specifying the vehicle 100 at a distance equal to or less than a predetermined reference distance from the target person. More specifically, of the remotely controlled vehicles 100, every vehicle 100 at a distance equal to or less than the reference distance from the target person is specified as the target vehicle. In the illustration in Fig. 5, the vehicle 100b and the vehicle 100c moving in a range r1 at distances equal to or less than the reference distance from the child Ps1 are specified as the target vehicles. In Fig. 5, the vehicles 100 specified in this way are given upward-sloping hatches.

In step S250, the controller 200 functioning as the signal transmission unit 240 transmits a control signal AS for changing a driving mode of the vehicle to the alert mode to each target vehicle specified in step S240. In the present embodiment, the controller 200 transmits a signal for reducing a running speed of the target vehicle as the control signal AS. A process of transmitting the control signal AS to the target vehicle such as step S250 is also called a signal transmission process. In the illustration in Fig, 5, the controller 200 transmits the control signal AS to the vehicle 100b and the vehicle 100c specified as the target vehicles.

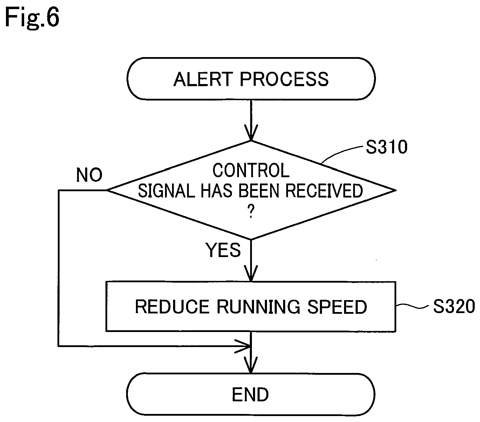

Fig. 6 is a flowchart of the alert process according to the present embodiment. In the present embodiment, the alert process is performed at a predetermined time interval by the vehicle controller 150 of each vehicle 100.

In step S310, the vehicle controller 150 judges whether the control signal AS has been received from the controller 200. If the control signal AS is judged to have been received, in step S320, the vehicle controller 150 controls each part of the vehicle 100 on the basis of the received control signal AS, thereby changing a driving mode of the vehicle 100 from the normal mode to the alert mode. More specifically, the vehicle controller 150 of the present embodiment controls the driving device 110 in step S320, thereby reducing a running speed of the vehicle 100. Specifically, in the present embodiment, if a driving mode of the vehicle 100 is the alert mode, a running speed of the vehicle 100 is lower than that in a case if the driving mode is the normal mode. Reducing a running speed of the vehicle 100 in this way makes an approach of the vehicle 100 to the target person less likely. Moreover, reducing a running speed of the vehicle 100 allows the target person or a person around the target person to visually recognize the vehicle 100 for a longer time, thereby improving the recognizability of the vehicle 100. As a result, it becomes possible for the target person having recognized the vehicle 100 to easily move away from the track RT in advance or for another person having recognized the vehicle 100 to easily instruct the target person in advance to get away from the track RT, for example.

According to the controller 200 of the present embodiment described above, if the first detection unit 250 detects a target person, the whereabouts determination unit 220 determines whereabouts of the target person on the basis of results of the detection. The moving object specification unit 230 specifies a target vehicle likely to approach the target person on the basis of the determined whereabouts. The signal transmission unit 240 transmits the control signal AS for changing a driving mode of the target vehicle to the alert mode to the target vehicle. According to this embodiment, by defining a detection condition for detecting a target person that allows detection of a person having a relatively low handling level responsive to the vehicle 100 moving by remote control such as an inexperienced person, a visitor, or a person in poor health, for example, it becomes possible to change a driving mode of the vehicle 100 likely to approach such a person to the alert mode. As a result, in an area likely to be approached by various types of persons having different handling levels responsive to the vehicle 100, it is possible to cause the vehicle 100 to run more properly by remote control.

In the present embodiment, the moving object specification unit 230 specifies the target vehicle by specifying the vehicle 100 at a distance equal to or less than the reference distance from the target person. This allows the target vehicle to be specified more properly.

In the present embodiment, the signal transmission unit 240 transmits a signal for reducing a running speed of the target vehicle as the control signal AS. Thus, by reducing a running speed of the vehicle 100 in the alert mode, it becomes possible for the vehicle 100 to give an alert against the target person.

In the system 10 of the present embodiment, the first detection unit 250 detects the target person using the sensor for remote control. In this embodiment, the sensor for remote control is applicable further to detection of the target person. This achieves reduction in cost for constructing the system 10 compared to a case where a sensor for detecting the target person is provided separately from the sensor for remote control, for example.

In the present embodiment, the sensor for remote control is composed of the camera 302 to capture an image for determining the location of the vehicle 100, and the first detection unit 250 detects the target person on the basis of the captured image Pi acquired by the camera 302. This makes the camera 302 used for remote control over the vehicle 100 further applicable to detection of the target person.

In the present embodiment, the first detection unit 250 detects the target person using the captured image Pi and the learning model 270, thereby allowing the target person to be detected more properly.

In the present embodiment, the whereabouts determination unit 220 determines whereabouts of the target person on the basis of results of the detection by the first detection unit 250 and location information about the sensor for remote control. This allows the whereabouts of the target person to be determined simply using the location information about the sensor for remote control.

In the present embodiment, the remote control unit 210 implements remote control to cause the vehicle 100 to run in the factory FC between the first place PL1 for implementation of the first step relating to manufacture of the vehicle 100 and the second place PL2 for implementation of the second step. This allows the vehicle 100 to be moved efficiently by remote control between places for implementations of respective steps relating to manufacture of the vehicle 100. Furthermore, if various types of persons come into and out of the factory FC, it is possible to move the vehicle 100 more properly by remote control in the factory FC.

### B. Second Embodiment

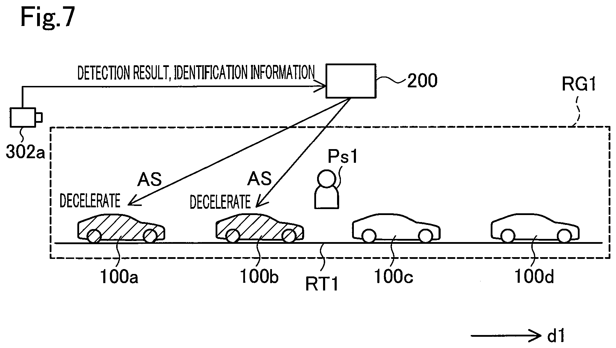

Fig. 7 is a schematic view showing an alert instruction process according to a second embodiment. Like Fig. 5, Fig. 7 schematically shows a situation around the first track RT1. In the present embodiment, unlike in the first embodiment, the controller 200 functioning as the moving object specification unit 230 specifies a target vehicle by specifying the vehicle 100 approaching a target person. The configurations being not described specifically in the second embodiment are the same as the configurations in the first embodiment.

In the present embodiment, in step S240 in Fig. 4, the controller 200 specifies the vehicle 100 approaching a target person as a target vehicle. In the illustration in Fig. 7, the vehicle 100a and the vehicle 100b approaching the child Ps1 as the target person are specified as the target vehicles. "The vehicle 100 approaching the target person" means that this vehicle 100 is moving in a direction in which a distance to the target person is reduced. Thus, in the illustration in Fig. 7, the vehicle 100c and the vehicle 100d moving away from the child Ps1 are not specified. The controller 200 specifies the vehicle 100 approaching the target person on the basis of whereabouts of the target person, and the location or a moving direction of the vehicle 100, for example. The moving direction of the vehicle 100 is determined on the basis of temporal change in the location of the vehicle 100 or the position of the vehicle 100, for example.

According to the above-described second embodiment, the moving object specification unit 230 specifies a target vehicle by specifying the vehicle 100 approaching a target person. This allows the target vehicle to be specified more properly.

### C. Third Embodiment

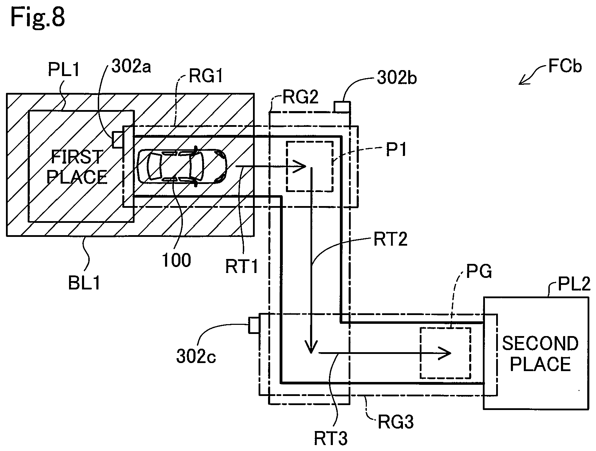

Fig. 8 shows automatic driving control over the vehicle 100 according to a third embodiment. Like Fig. 2A, Fig. 8 shows how automatic driving of the vehicle 100 is controlled in a factory FCb. In the present embodiment, unlike in the first embodiment or the second embodiment, the controller 200 functioning as the moving object specification unit 230 specifies a target vehicle by specifying the vehicle 100 moving in a building where a target person is present. The configurations being not described specifically in the third embodiment are the same as the configurations in the first embodiment.

Unlike in the factory FC in Fig. 2A, in the factory FCb in Fig. 8, the first place PL1 and a part of the first track RT1 are arranged in a building BL1. The building is BL1 is hatched in Fig. 8.

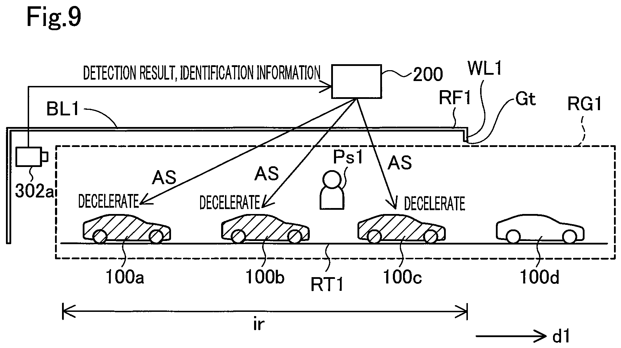

Fig. 9 is a schematic view showing an alert instruction process according to the third embodiment. Like Fig. 5, Fig. 9 schematically shows a situation around the first track RT1. Fig. 9 schematically shows a wall WL1 and a ceiling RF1 for partitioning the interior and exterior of the building BL1. Fig. 9 schematically shows a range ir of the track RT defined as inside the building BL1. In the illustration in Fig. 9, the vehicle 100 is movable from the interior to the exterior of the building BL1 through a gate Gt provided at the wall WL1 while running along the first track RT1. In the illustration in Fig. 9, the vehicle 100a, the vehicle 100b, and the vehicle 100c are specified as target vehicles that are moving in the building BL1 where the child Ps1 as a target person is present.

According to the above-described third embodiment, the moving object specification unit 230 specifies a target vehicle by specifying the vehicle 100 moving in a building where a target person is present. This allows the target vehicle to be specified properly.

In other embodiments, the moving object specification unit 230 may specify a moving object as a target of transmission of the control signal AS by implementing any two or all of specification of a moving object at a distance equal to or less than the reference distance from a target person, specification of a moving object approaching a target person, and specification of a moving object moving in a building where a target person is present described in the first to third embodiments respectively. If a moving object at a distance equal to or less than the reference distance from a target person is specified and a moving object approaching a target person is specified, for example, each of these moving objects may be specified as a target moving object, or a moving object at a distance equal to or less than the reference distance from the target person and approaching the target person may be specified as a target moving object.

### D. Fourth Embodiment

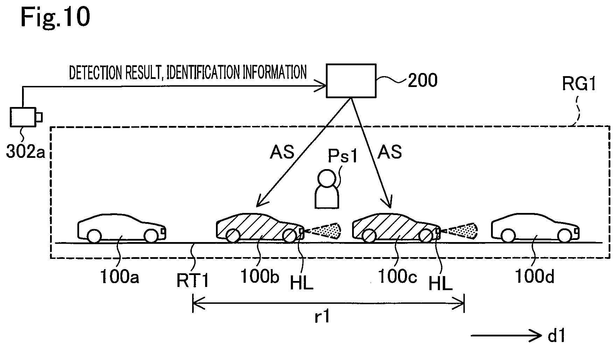

Fig. 10 is a schematic view showing an alert instruction process according to a fourth embodiment. Like Fig. 5, Fig. 10 schematically shows a situation around the first track RT1. In the present embodiment, unlike in the first embodiment, the controller 200 functioning as the signal transmission unit 240 transmits a signal for increasing the quantity of light emitted from the vehicle 100 as the control signal AS. Specifically, in the present embodiment, if a driving mode of the vehicle 100 is the alert mode, the quantity of light emitted from the vehicle 100 is larger than that emitted if a driving mode is the normal mode. The configurations being not described specifically in the fourth embodiment are the same as the configurations in the first embodiment.

In the illustration in Fig. 10, the controller 200 transmits a signal for turning on a headlight HL at the vehicle 100 as the control signal AS to the specified vehicle 100b and vehicle 100c. In the present embodiment, the headlight HL of each vehicle 100 is generally off. In response to receipt of the control signal AS, the vehicle controller 150 of each vehicle 100 turns on the headlight HL. In other embodiments, a signal for increasing a light quantity may be a signal for increasing a light quantity further from the headlight HL already on, for example, or may be a signal for increasing a light quantity from each type of light such as a fog light, a taillight, or a different type of decorative light in addition to the headlight HL or instead of the headlight HL.

According to the above-described fourth embodiment, the signal transmission unit 240 transmits a signal for increasing the quantity of light emitted from the vehicle 100 as the control signal AS. Increasing the quantity of light emitted from the vehicle 100 in response to the control signal AS allows a target person or a person around the target person to visually recognize the vehicle 100 more easily, thereby improving the recognizability of the vehicle 100. As a result, it becomes possible for the target person having recognized the vehicle 100 to easily move away from the track RT in advance or for another person having recognized the vehicle 100 to easily instruct the target person in advance to get away from the track RT, for example. By increasing the quantity of light emitted from the vehicle 100 in the alert mode in this way, it becomes possible for the vehicle 100 to give an alert against the target person.

### E. Fifth Embodiment

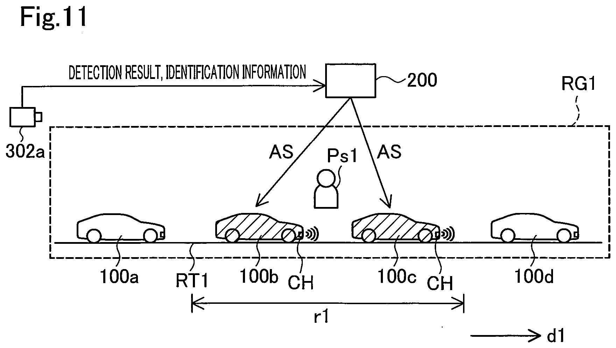

Fig. 11 is a schematic view showing an alert instruction process according to a fifth embodiment. Like Fig. 5, Fig. 11 schematically shows a situation around the first track RT1. In the present embodiment, unlike in the first embodiment, the controller 200 functioning as the signal transmission unit 240 transmits a signal for increasing the volume of sound emitted from the vehicle 100 as the control signal AS. Specifically, in the present embodiment, if a driving mode of the vehicle 100 is the alert mode, the volume of sound emitted from the vehicle 100 is larger than that emitted if a driving mode is the normal mode. The "signal for increasing a sound volume" means a signal for increasing the volume of sound different from sound generated by the operation of the driving device 110 responsive to an acceleration of the vehicle 100. The configurations being not described specifically in the fifth embodiment are the same as the configurations in the first embodiment.

In the illustration in Fig. 11, the controller 200 transmits a signal for sounding a horn CH at the vehicle 100 continuously or intermittently for a predetermined duration as the control signal AS to the specified vehicle 100b and vehicle 100c. In the present embodiment, the horn CH of each vehicle 100 is generally not sounded. In response to receipt of the control signal AS, the vehicle controller 150 of each vehicle 100 sounds the horn CH in a manner described above. In other embodiments, a signal for increasing a sound volume may be a signal for increasing the sound volume of the horn CH further already sounded, or may be a signal for increasing the volume of warning sound or background music from a speaker provided inside or outside the vehicle 100 in addition to the horn CH or instead of the horn CH, for example.

According to the above-described fifth embodiment, the signal transmission unit 240 transmits a signal for increasing the volume of sound emitted from the vehicle 100 as the control signal AS. Increasing the volume of sound emitted from the vehicle 100 in response to the control signal AS allows a target person or a person around the target person to aurally recognize the vehicle 100 more easily, thereby improving the recognizability of the vehicle 100. As a result, it becomes possible for the target person having recognized the vehicle 100 to easily move away from the track RT in advance or for another person having recognized the vehicle 100 to easily instruct the target person in advance to get away from the track RT, for example. By increasing the volume of sound emitted from the vehicle 100 in the alert mode in this way, it becomes possible for the vehicle 100 to give an alert against the target person.

In other embodiments, the signal transmission unit 240 may transmit any two or all of a signal for reducing a moving speed, a signal for increasing a light quantity, and a signal for increasing a sound volume as the control signal AS described in the first embodiment, the fourth embodiment, and the fifth embodiment respectively. For example, transmitting a signal for increasing a light quantity and a signal for increasing a sound volume as the control signal AS improves the recognizability of a target vehicle visually and aurally. Thus, in this case, even if one of the eyesight and hearing of a target person is relatively low, for example, the target person still recognizes a target vehicle more easily. If two or all of these signals are transmitted as the control signal AS, a single signal may function as a plurality of signals, for example. For example, the signal transmission unit 240 may transmit a single signal functioning both as a signal for increasing a light quantity and a signal for increasing a sound volume as the control signal AS. In this case, the vehicle controller 150 of the vehicle 100 may be configured to perform a process of increasing a light quantity and a process of increasing a sound volume in response to receipt of the signal.

### F. Sixth Embodiment

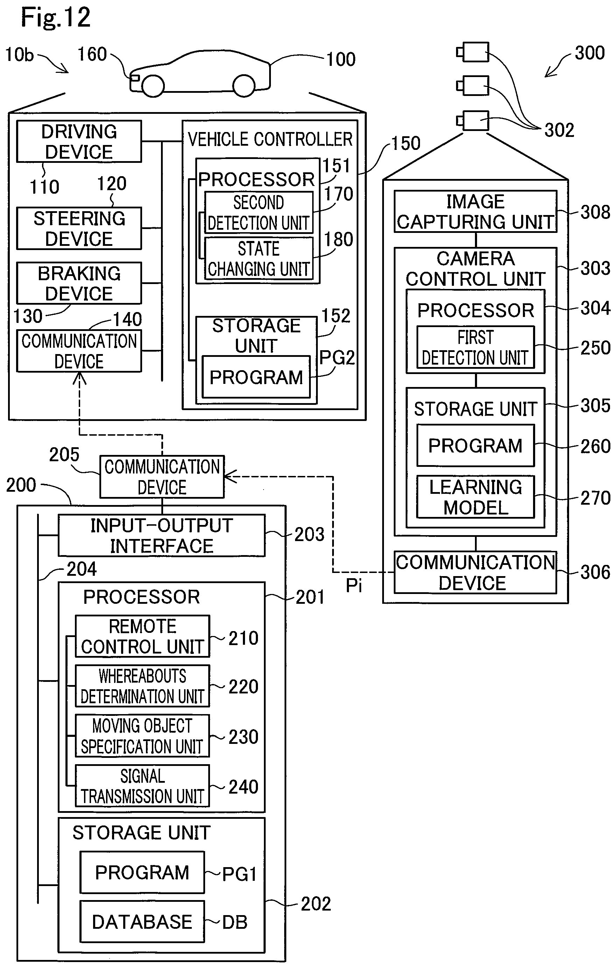

Fig. 12 is an explanatory view showing a schematic configuration of a system 10b according to a sixth embodiment. Unlike the vehicle 100 of the first embodiment, the vehicle 100 of the present embodiment includes a second detection unit 170. Furthermore, the controller 200 functioning as the signal transmission unit 240 transmits a signal for increasing the sensitivity of detection by the second detection unit 170 as the control signal AS, as will be described later. Specifically, in the present embodiment, if a driving mode of the vehicle 100 is the alert mode, the sensitivity of the second detection unit 170 provided at the vehicle 100 is higher than that if a driving mode is the normal mode. The configurations being not described specifically in the sixth embodiment are the same as the configurations in the first embodiment.

The second detection unit 170 controls an ambient sensor 160 and detects a situation around the vehicle 100 using the ambient sensor 160. The ambient sensor 160 is configured as a vehicle-mounted camera of any type such as a front camera, a side camera, or a rear camera, a sensor of any type such as LiDAR, a millimeter wave radar, an ultrasonic wave sensor, or an infrared sensor, or a sensor system configured by combining such cameras or sensors appropriately, for example. In the present embodiment, the processor 151 provided at the vehicle controller 150 executes a program stored in a storage unit of the vehicle controller 150, thereby realizing a function as the second detection unit 170 in the vehicle controller 150.

In the present embodiment, the controller 200 transmits a signal for increasing the sensitivity of detection by the second detection unit 170 as the control signal AS in step S250 in Fig. 4. This signal is a signal for turning on the ambient sensor 160 in an off state, a signal for increasing the resolution of the ambient sensor 160, a signal for shortening a time interval of acquisition of a sensor value from the ambient sensor 160 by the second detection unit 170, or a signal for amplifying a sensor value from the ambient sensor 160 acquired by the second detection unit 170, for example. If the ambient sensor 160 is composed of a camera, the signal may be a signal for increasing the resolution of an image captured by the camera, for example.

A state changing unit 180 shown in Fig. 12 performs a changing process if the second detection unit 170 detects a target person. The changing process is a process of changing a driving state of a moving object detected by the detection process. More specifically, "change of a driving state" means that a driving state of the vehicle 100 is changed to a driving state different from a driving state in a case where the second detection unit 170 does not detect a target person. Preferably, the changing process includes at least any of a process of reducing a moving speed of a moving object, a process of increasing the quantity of light emitted from a moving object, and a process of increasing the volume of sound emitted from a moving object. Specifically, the changing process preferably includes a process for identifying a moving object with better performance, and in the present embodiment, includes a process of reducing a moving speed of the moving object. Like the second detection unit 170, the state changing unit 180 of the present embodiment is a functional unit realized by execution of a program by the processor provided at the vehicle controller 150. In the following, a state where a driving state of the vehicle 100 is changed by the changing process is also called a changed state.

The state changing unit 180 of the present embodiment performs a releasing process in addition to the changing process. The releasing process is a process performed if a target person becomes undetected by the second detection unit 170 after implementation of the changing process, and is a process of releasing the changed state.

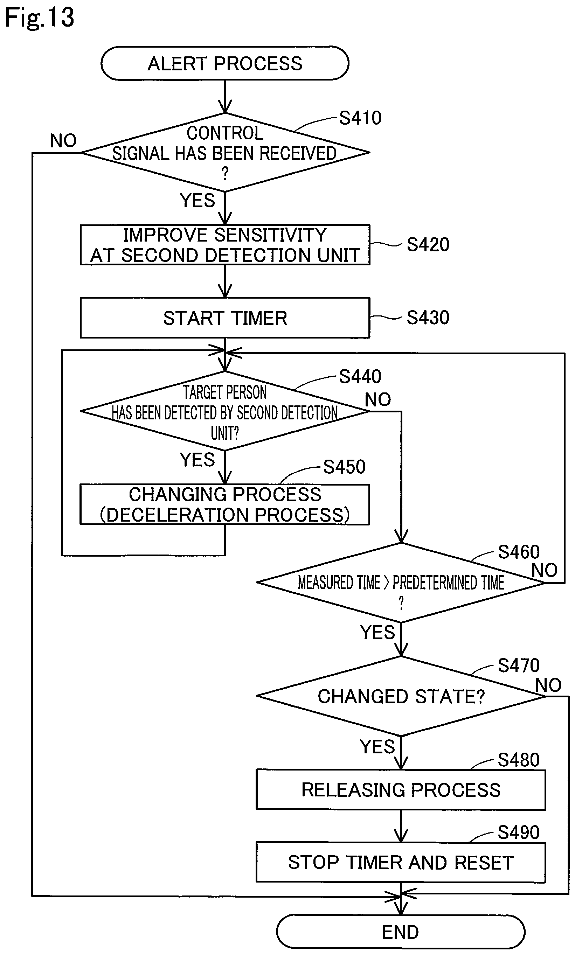

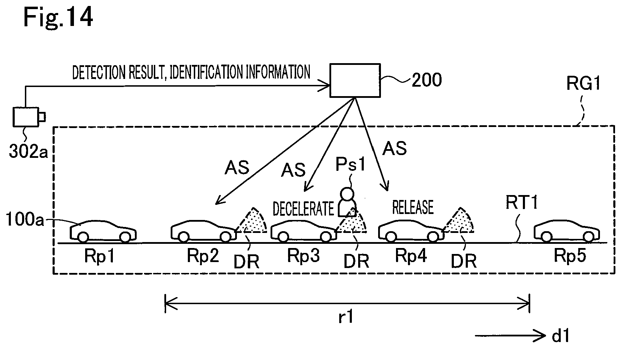

Fig. 13 is a flowchart of an alert process according to the sixth embodiment. Fig. 14 is a schematic view showing the alert process according to the present embodiment. Fig. 14 schematically shows a situation around the first track RT1 in a manner substantially similar to that of Fig. 5. Meanwhile, unlike Fig. 5, Fig. 14 shows a state where one vehicle 100 (more specifically, vehicle 100a) is running in the traveling direction d1 along the first track RT1. For example, a location Rp2 is a location forward of a location Rp1 and a moment when the vehicle 100 is running at the location Rp2 is after a moment when the vehicle 100 is running at the location Rp1. Of locations on the first track RT1 shown in Fig. 14 from the location Rp1 to a location Rp5, the locations Rp2 to Rp4 are within the range r1.

Like in step S310 in Fig. 6, in step S410 in Fig. 13, the vehicle controller 150 judges whether the control signal AS has been received. In the illustration in Fig. 14, for example, when the vehicle 100a is running at the location Rp1, the vehicle 100a is not detected by the controller 200 so the control signal AS is not transmitted to the vehicle 100a. When the vehicle 100a thereafter continues running to get into the range r1, the vehicle 100a is specified by the controller 200 and receives the control signal AS at the location Rp2, for example.

If the control signal AS is judged to have been received, the vehicle controller 150 increases the sensitivity of detection by the second detection unit 170 in step S420 on the basis of the received control signal AS. In step S420 of the present embodiment, the vehicle controller 150 turns on the ambient sensor 160 normally off. Fig. 14 schematically shows a detection range DR where a target person is detectable by the second detection unit 170 with increased sensitivity. In step S430, the vehicle controller 150 starts a timer (not shown in the drawings) to start time measurement using the timer.

In step S440, the vehicle controller 150 judges whether a target person has been detected by the second detection unit 170. The second detection unit 170 may detect a target person in the same way as detection of a target person by the first detection unit 250. For example, if the ambient sensor 160 is composed of a camera, a target person may be detected in the same way on the basis of the captured image Pi, for example. This may be realized by storing a learning model similar to the learning model 270 in advance into the storage unit of the vehicle controller 150, and using the stored learning model for detection of the target person by the second detection unit 170. Specifically, in this case, detection by the first detection unit 250 and detection by the second detection unit 170 are realized under similar conditions. In the illustration in Fig. 14, the child Ps1 is within the detection range DR when the vehicle 100a is running at the location Rp3. Thus, in this case, the vehicle controller 150 judges that the target person has been detected by the second detection unit 170.

If a target person is judged to have been detected in step S440, the vehicle controller 150 functioning as the state changing unit 180 performs the changing process in step S450. In step S450 of the present embodiment, the vehicle controller 150 performs a deceleration process as the changing process for changing the vehicle 100a to a decelerated state. The decelerated state means a state where a running speed of the vehicle 100 is lower than a running speed in a case where a target person is not detected by the second detection unit 170. More specifically, the vehicle controller 150 reduces a running speed of the vehicle 100 by controlling the driving device 110. In the illustration in Fig. 14, the vehicle 100a is decelerated when the vehicle 100a is running at the location Rp3.

If a target person is judged not to have been detected in step S440, it is judged in step S460 whether time measured by the timer started in step S430 has exceeded a predetermined period of time. If the measured time is judged not to have exceeded the predetermined period of time, the vehicle controller 150 returns the processing to step S440.

If the measured time is judged to have exceeded the predetermined period of time in step S460, the vehicle controller 150 judges in step S470 whether the changed state is applied. If the changed state is judged to be applied, the vehicle controller 150 functioning as the state changing unit 180 performs the releasing process in step S480. In the illustration in Fig. 14, when the vehicle 100a is running at the location Rp4, the child Ps1 is not detected by the second detection unit 170 and the measured time exceeds the predetermined period of time. Thus, in this case, the vehicle controller 150 performs the releasing process to release the changed state, namely, release the decelerated state. More specifically, the vehicle controller 150 accelerates the vehicle 100a by controlling the driving device 110. In step S490, the vehicle controller 150 stops the timer started in step S430 and resets the time measured by the timer.

In the illustration in Fig. 14, a target person detected by the first detection unit 250 and a target person detected by the second detection unit 170 are the same child Ps1. A target person detected by the first detection unit 250 and a target person detected by the second detection unit 170 may be the same person like in this case or may be different persons. For example, the child Ps1 may be detected as a target person by the first detection unit 250 in the detection process, and a child different from the child Ps1 may be detected as a target person by the second detection unit 170 in step S440 in Fig. 13.

According to the above-described sixth embodiment, the signal transmission unit 240 transmits a signal as the control signal AS for increasing the sensitivity of detection by the second detection unit 170 that detects a situation around the vehicle 100. Thus, by increasing the sensitivity of detection by the second detection unit 170 provided at the vehicle 100 in the alert mode, it becomes possible for the vehicle 100 to give an alert against a target person.

In the present embodiment, if the second detection unit 170 detects a target person, the state changing unit 180 performs the changing process of changing a driving state of the vehicle 100. The changing process includes at least any of a process of reducing a running speed of the vehicle 100, a process of increasing the quantity of light emitted from the vehicle 100, and a process of increasing the volume of sound emitted from the vehicle 100. This allows the vehicle 100 to detect a target person by itself and to perform the changing process by itself if the vehicle 100 detects a target person.

In the present embodiment, if a target person becomes undetected by the second detection unit 170 after implementation of the changing process, the state changing unit 180 performs the releasing process of releasing the changed state. This allows the vehicle 100 to release the changed state by itself if a target person becomes undetected by the second detection unit 170 after implementation of the changing process. This also makes it possible to suppress reduction in movement efficiency or reduction in energy efficiency of the vehicle 100 to be caused if the vehicle 100 continues to run while keeping the changed state.

In other embodiments, in addition to a signal for increasing sensitivity described in the sixth embodiment, for example, the signal transmission unit 240 may transmit at least any of a signal for reducing a moving speed, a signal for increasing a light quantity, and a signal for increasing a sound volume as the control signal AS described in the first embodiment, the fourth embodiment, and the fifth embodiment respectively to a target vehicle, for example. In this case, the state changing unit 180 may further change a driving state having been changed in response to the control signal AS in the changing process. If a signal for increasing sensitivity and a signal for reducing a moving speed are transmitted as the control signal AS to the vehicle 100, for example, the state changing unit 180 may further reduce a running speed of the vehicle 100 from a running speed having been reduced in response to the control signal AS in the deceleration process.

### G. Seventh Embodiment

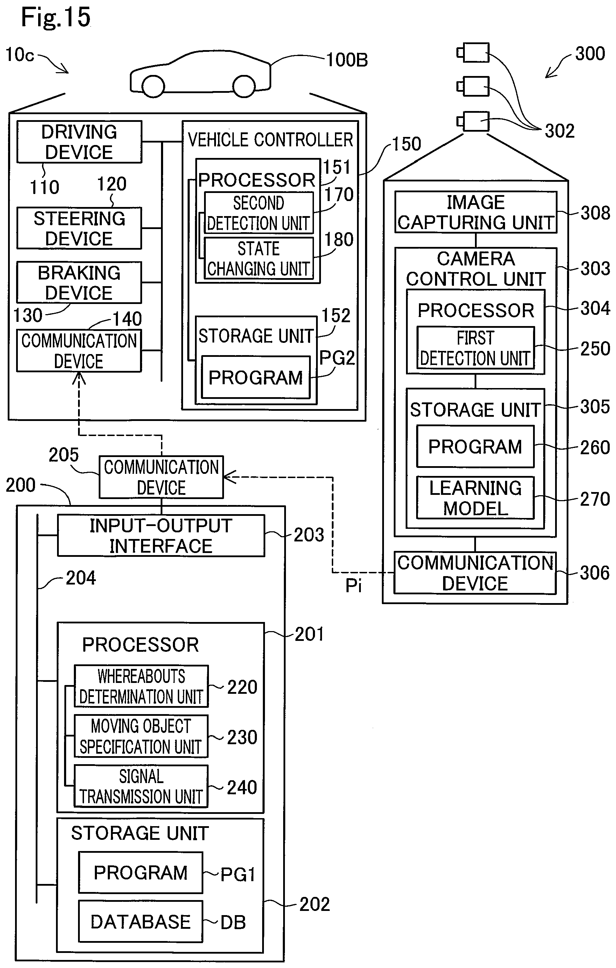

Fig. 15 is an explanatory view showing a schematic configuration of a system 10c according to a seventh embodiment. Unlike that of the first embodiment, a vehicle 100B of the present embodiment is configured to be capable of running by autonomous control by the vehicle 100B. Furthermore, the controller 200 of the present embodiment does not function as the remote control unit 210. The configurations being not described specifically in the seventh embodiment are the same as the configurations in the first embodiment.

In the present embodiment, a communication device 140 of the vehicle 100B is capable of communicating with the controller 200 and the vehicle determination unit 300 by radio communication. A processor 151 of a vehicle controller 150 executes a program PG2 stored in advance in a storage unit 152 to realize various functions including a function of causing the vehicle 100B to run by autonomous control.

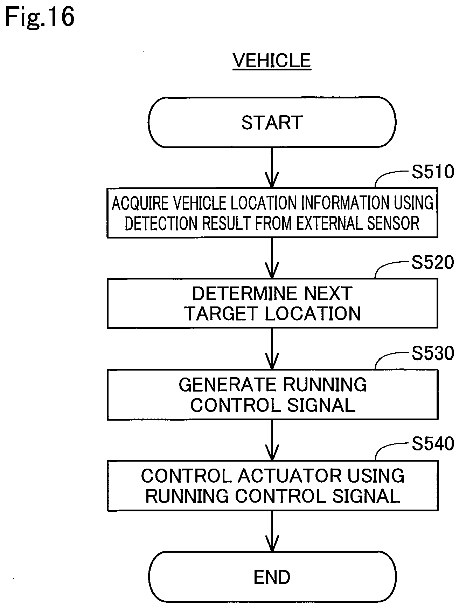

Fig. 16 is a flowchart showing a running method of causing the vehicle to run according to the present embodiment. In step S510, the vehicle 100B acquires vehicle location information using detection result output from the camera as an external sensor. In step S520, the vehicle controller 150 determines a target location to which the vehicle 100B is to move next. In step S530, the vehicle controller 150 generates a running control signal for causing the vehicle 100B to run to the determined target location. In step S540, the vehicle controller 150 controls an actuator using the generated running control signal, thereby causing the vehicle 100B to run by following a parameter indicated by the running control signal. The vehicle controller 150 repeats the acquisition of vehicle location information, the determination of a target location, the generation of a running control signal, and the control over the actuator in a predetermined cycle. According to the running control in the present embodiment, it is possible to cause the vehicle 100B to run by autonomous control without controlling the vehicle 100B remotely using the remote control unit 210.

In the first embodiment to the seventh embodiment, it might be said that the vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving." In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

According to the above-described system 10c of the present embodiment, in an area likely to be approached by various types of persons having different handling levels responsive to the vehicle 100B running by autonomous control, it is possible to cause the vehicle 100B to run more properly by autonomous control. In the seventh embodiment, the controller 200 may be configured to be capable of performing any of the alert instruction processes described in the first embodiment to the sixth embodiment, for example. Furthermore, the vehicle 100B may be configured to be capable of performing any of the alert processes described in the first embodiment to the sixth embodiment. In other embodiments, the vehicle 100B may be configured to be capable of running both by autonomous control and by remote control, for example.

### H. Other Embodiments

(H1) In the above-described embodiments, the signal transmission unit 240 transmits at least any of a signal for reducing a moving speed, a signal for increasing a light quantity, and a signal for increasing a sound volume as the control signal AS to a target vehicle. By contrast, in addition to or instead of these signals, the signal transmission unit 240 may transmit as the control signal AS a signal for changing a running route of the vehicle 100 to a route along which the vehicle 100 goes farther from a target person or a signal for changing a threshold for a distance for actuation of a pre-crash brake so as to actuate the pre-crash brake earlier, for example. Furthermore, the changing process described in the sixth embodiment may include a process of changing a running route or a process of changing a threshold for a distance for a pre-crash brake, for example.

(H2) In the above-described embodiments, the whereabouts determination unit 220 acquires location information about the camera 302 by referring to the database DB on the basis of identification information about the camera 302. However, the camera 302 may not have to acquire location information about the camera 302 in this way. For example, the camera control unit 303 may transmit its own location information together with the detection result of the target person to the controller 200 and the whereabouts determination unit 220 may acquire the location information transmitted in this way. Even if the sensor for remote control is configured as a sensor different from the camera 302, location information about the sensor for remote control may be acquired in a similar way to that described above.

(H3) In the above-described embodiments, the whereabouts determination unit 220 determines whereabouts of a target person on the basis of a detection result of the target person from the first detection unit 250 and location information about the camera 302. By contrast, the whereabouts determination unit 220 may not have to determine whereabouts of a target person in this way but may determine whereabouts of a target person without using location information about the camera 302, for example. The whereabouts determination unit 220 may determine whereabouts on the basis of a background or a location marker in the captured image Pi in which a target person is detected, for example. In this case, the coordinates of the target person may be determined on the basis of a relationship between the location of the target person and the location of the background or location marker in the captured image Pi, for example.

(H4) In the above-described embodiments, the first detection unit 250 detects a target person on the basis of the captured image Pi acquired by the camera 302 functioning as the sensor for remote control. By contrast, if the sensor for remote control is composed of a detector such as LiDAR, a millimeter wave radar, an ultrasonic wave sensor, or an infrared sensor, for example, the first detection unit 250 may detect a target person using such a detector. If an infrared sensor is used for detecting a target person, a condition about a temperature may be employed as a detection condition allowing a person in poor health to be detected indirectly, for example. In this case, the detection condition may be fulfilled if a body temperature is higher than a temperature set in advance, for example. Moreover, the sensor for remote control and a sensor used for detection of a target person by the first detection unit 250 may be provided separately. For example, a camera used for detection of a target person by the first detection unit 250 may be provided separately from the camera 302 for remote control.

(H5) While the state changing unit 180 performs the releasing process by itself in the above-described sixth embodiment, the state changing unit 180 may not have to perform the releasing process in this way. For example, if a target person becomes undetected by the second detection unit 170, the controller 200 may transmit a signal for releasing the changed state to the vehicle 100.

(H6) In the above-described embodiments, whereabouts determined by the whereabouts determination unit 220 may not have to be the coordinates of a target person but may simply be location information allowing the moving object specification unit 230 to specify a target vehicle. If the moving object specification unit 230 specifies the vehicle 100 moving in a building where a target person is present as a target vehicle like in the third embodiment, for example, whereabouts of the target person may simply be determined as information allowing a determination of at least a building where the target person is present. Thus, the whereabouts of the target person in this case may be determined as information indicating the building where the target person is present, for example. In another case, whereabouts of a target person may be determined as location information about the camera 302 having acquired the captured image Pi containing the target person or location information about a range capable of being subjected to image capturing by the camera 302, for example. If a target person is detected by the camera 302a shown in Fig. 2A, for example, information about an installation location of the camera 302a or location information indicating the range RG1 capable of being subjected to image capturing by the camera 302a may be determined as whereabouts of the target person. In this case, if the range RG1 is a range within a building, for example, the information about the installation location of the camera 302a or the location information indicating the range RG1 corresponds to information allowing a determination of the building where the above-described target person is present. Furthermore, in this case, the vehicle 100 moving within the range RG1 or the vehicle 100 approaching the range RG1 may be specified as a target vehicle, for example.

(H7) In the above-described embodiments, the first detection unit 250 may simply be required to be a unit separate from a moving object likely to be a target of specification by the moving object specification unit 230 and the first detection unit 250 may be provided at the controller 200, for example. In this case, the vehicle determination unit 300 may transmit the captured image Pi or a sensor value from another sensor provided at the vehicle determination unit 300 to the controller 200 without analyzing the captured image Pi or the sensor value, and the first detection unit 250 provided at the controller 200 may detect a target person by analyzing the transmitted captured image Pi or sensor value, for example.

(H8) In the above-described first to sixth embodiments, the controller 200 performs processing from acquisition of location information about the vehicle 100 to generation of a running control signal. By contrast, at least part of the processing from acquisition of vehicle location information to generation of a running control signal may be performed by the vehicle 100. For example, embodiments (1) to (3) described below may be employed.
(1) The controller 200 may acquire vehicle location information, determine a target location to which the vehicle 100 is to move next, and generate a route from a current location of the vehicle 100 indicated by the acquired vehicle location information to the target location. The controller 200 may generate a route to the target location between the current location and a destination or generate a route to the destination. The controller 200 may transmit the generated route to the vehicle 100. The vehicle 100 may generate a running control signal in such a manner as to cause the vehicle 100 to run along the route received from the controller 200 and control an actuator using the generated running control signal.
(2) The controller 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.
(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the controller 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(H9) In the above-described seventh embodiment, the vehicle 100B may be equipped with an internal sensor, and detection result output from the internal sensor may be used in at least one of generation of a route and generation of a running control signal. For example, the vehicle 100B may acquire detection result from the internal sensor, and in generating the route, may reflect the detection result from the internal sensor in the route. The vehicle 100B may acquire detection result from the internal sensor, and in generating the running control signal, may reflect the detection result from the internal sensor in the running control signal.

(H10) In the above-described seventh embodiment, the vehicle 100B acquires vehicle location information using detection result from the external sensor. By contrast, the vehicle 100B may be equipped with an internal sensor, the vehicle 100B may acquire vehicle location information using detection result from the internal sensor, determine a target location to which the vehicle 100B is to move next, generate a route from a current location of the vehicle 100B indicated by the acquired vehicle location information to the target location, generate a running control signal for running along the generated route, and control an actuator of the vehicle 100B using the generated running control signal. In this case, the vehicle 100B is capable of running without using any detection result from an external sensor. The vehicle 100B may acquire target arrival time or traffic congestion information from outside the vehicle 100B and reflect the target arrival time or traffic congestion information in at least one of the route and the running control signal. The functional configuration of the system 10 may be entirely provided at the vehicle 100. Specifically, the processes realized by the system 10 in the present disclosure may be realized by the vehicle 100 alone.

(H11) In the above-described first through sixth embodiments, the controller 200 automatically generates a running control signal to be transmitted to the vehicle 100. By contrast, the controller 200 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the controller 200 through wire communication or wireless communication, for example, and the controller 200 may generate a running control signal responsive to the operation on the operating device.

(H12) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory FC, or a remaining component such as a bodyshell may be mounted on the vehicle 100 after the vehicle 100 is shipped from a factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(H13) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(H14) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory FC where the vehicle is manufactured.

(H15) In each of the above-described embodiments, some or all of functions and processes realized by software may be realized by hardware. Furthermore, some or all of functions and processes realized by hardware may be realized by software. For example, any type of circuit such as an integrated circuit or a discrete circuit may be used as hardware for realizing the functions described in each of the foregoing embodiments.

The present disclosure is not limited to the above-described embodiments but is feasible in various configurations within a range not deviating from the purport of the disclosure. For example, technical features in the embodiments corresponding to those in each of the aspects described in SUMMARY may be replaced or combined, where appropriate, with the intention of solving some or all of the aforementioned problems or achieving some or all of the aforementioned effects. Unless being described as absolute necessities in the present specification, these technical features may be deleted, where appropriate.

## Claims

1. A system (10; 10b), comprising: a plurality of moving objects (100a-100d);)
a first detection unit (250);
a remote control unit (210) configured to move the plurality of moving objects by implementing remote control;
a whereabouts determination unit (220), wherein when a first detection unit (250) provided at the system (10;10b) detects a target person, the whereabouts determination unit (220) configured to determine whereabouts of the target person on the basis of detection results of the target person by the first detection unit (250);
a moving object specification unit (230) configured to specify, of the plurality of moving objects, a moving object being controlled by the remote control and likely to approach the target person on the basis of the determined whereabouts;
a signal transmission unit (240) configured to transmit a control signal (AS) to the specified moving object, the control signal (AS) being a signal for changing a driving mode of the specified moving object to an alert mode for giving an alert against the target person; **characterized in that** the system further comprises
a sensor for remote control used for the remote control and for determining locations of the plurality of moving objects, wherein
the first detection unit (250) detects the target person using the sensor for remote control.

2. The system (10, 10b) according to claim 1, wherein
the specified moving object includes a second detection unit (170) configured to detect a situation around the specified moving object;
the signal transmission unit (240) is configured to transmit a signal for increasing the sensitivity of detection by the second detection unit as the control signal (AS);
the specified moving object includes a state changing unit (180) configured to perform a changing process of changing a driving state of the specified moving object when the second detection unit (170) detects a target person, and
the changing process includes at least any of a process of reducing a moving speed of the specified moving object, a process of increasing a quantity of light emitted from the specified moving object, and a process of increasing a volume of sound emitted from the specified moving object.

3. The system (10, 10b) according to claim 1 or 2, wherein
the signal transmission unit (240) transmits a signal for reducing a moving speed of the specified moving object as the control signal (AS).

4. The system (10, 10b) according to any of claims 1 to 3, wherein
the signal transmission unit (240) transmits at least either a signal for increasing a quantity of light emitted from the specified moving object or a signal for increasing a volume of sound emitted from the specified moving object as the control signal (AS).

5. The system (10;10b) according to any of claims 1 to 4, wherein
the sensor for remote control is composed of a camera (302;302a;302b;302c) that captures an image used for determining the location of each object of the plurality of moving objects.

6. The system (10;10b) according to any of claims 1 to 5, wherein
the first detection unit (250) detects the target person on the basis of the captured image (Pi) acquired by the camera (302;302a;302b;302c), and a learning model (270) having learned about whether a person satisfying a predetermined detection condition is in an input image.

7. The system (10;10b) according to any of claims 1 to 6, wherein
the whereabouts determination unit (220) determines the whereabouts on the basis of the detection result about the target person and location information about the sensor for remote control.

8. The system (10;10b) according to any of claims 1 to 7, wherein
each moving object is a vehicle (100;100a;100b;100c;100d),
the remote control unit (210) causes each moving object to run between a first place (PL1) and a second place (PL2) in a factory (FC) for manufacture of each moving object by implementing the remote control, and
a first step relating to manufacture of each moving object is performed at the first place (PL1) and a second step as a step subsequent to the first step is performed at the second place (PL2).

9. The system (10;10b) according to claim 2, wherein
when a target person becomes undetected by the second detection unit (170) after implementation of the changing process, the state changing unit (180) performs a process of releasing a state where the driving state is changed by the changing process.

10. A method of controlling a plurality of moving objects implemented in a system (10;10b) that moves the plurality of moving objects by remote control via a sensor for remote control used for the remote control and for determining locations of the plurality of moving object, comprising:
a step of detecting a target person using a first detection unit (250) provided at the system (10;10b), wherein the first detection unit (250) detects the target person using the sensor for remote control;
a step of determining whereabouts of the target person on the basis of detection results of the target person by the first detection unit (250);
a step of specifying a moving object of the plurality of moving objects being controlled by the remote control and likely to approach the target person on the basis of the determined whereabouts; and
a step of changing a driving mode of the specified moving object to an alert mode for giving an alert against the target person.

## Patentansprüche

1. System (10; 10b), umfassend:
eine Vielzahl von sich bewegenden Objekten (100a-100d);
eine erste Erfassungseinheit (250);
eine Fernsteuerungseinheit (210), die konfiguriert ist, um die Vielzahl von beweglichen Objekten durch Fernsteuerung zu bewegen;
eine Aufenthaltsortbestimmungseinheit (220), wobei, wenn eine erste Erfassungseinheit (250), die an dem System (10; 10b) bereitgestellt ist, eine Zielperson erfasst, die Aufenthaltsortbestimmungseinheit (220) konfiguriert ist, um den Aufenthaltsort der Zielperson basierend auf den Erfassungsresultaten der Zielperson durch die erste Erfassungseinheit (250) zu bestimmen;
eine Spezifizierungseinheit für sich bewegendes Objekt (230), die konfiguriert ist, um aus der Vielzahl von sich bewegenden Objekten ein sich bewegendes Objekt zu spezifizieren, das durch die Fernsteuerung gesteuert wird und sich basierend auf dem bestimmten Aufenthaltsort wahrscheinlich der Zielperson nähert;
eine Signalübertragungseinheit (240), die konfiguriert ist, um ein Steuersignal (AS) an das spezifizierte sich bewegende Objekt zu übertragen, wobei das Steuersignal (AS) ein Signal zum Ändern eines Fahrmodus des spezifizierten sich bewegenden Objekts in einen Warnmodus ist, um eine Warnung vor der Zielperson abzugeben; **dadurch gekennzeichnet, dass** das System ferner Folgendes umfasst
einen Sensor zur Fernsteuerung, der für die Fernsteuerung und zum Bestimmen von Standorten der Vielzahl von sich bewegenden Objekten verwendet wird,
wobei die erste Erfassungseinheit (250) die Zielperson unter Verwendung des Sensors zur Fernsteuerung erfasst.

2. System (10, 10b) nach Anspruch 1, wobei
das spezifizierte sich bewegende Objekt eine zweite Erfassungseinheit (170) beinhaltet, die konfiguriert ist, um eine Situation um das spezifizierte sich bewegende Objekt herum zu erfassen;
die Signalübertragungseinheit (240) konfiguriert ist, um ein Signal zum Erhöhen der Erfassungsempfindlichkeit durch die zweite Erfassungseinheit als das Steuersignal (AS) zu übertragen;
das spezifizierte sich bewegende Objekt eine Zustandsänderungseinheit (180) beinhaltet, die konfiguriert ist, um einen Änderungsvorgang zum Ändern eines Fahrzustands des spezifizierten sich bewegenden Objekts durchzuführen, wenn die zweite Erfassungseinheit (170) eine Zielperson erfasst, und
der Veränderungsprozess mindestens einen Vorgang zum Verringern einer Bewegungsgeschwindigkeit des spezifizierten sich bewegenden Objekts, einen Vorgang zum Erhöhen einer von dem spezifizierten sich bewegenden Objekt emittierten Lichtmenge und einen Vorgang zum Erhöhen einer von dem spezifizierten sich bewegenden Objekt emittierten Lautstärke beinhaltet.

3. System (10, 10b) nach Anspruch 1 oder 2, wobei
die Signalübertragungseinheit (240) ein Signal zum Verringern einer Bewegungsgeschwindigkeit des spezifizierten sich bewegenden Objekts als Steuersignal (AS) überträgt.

4. System (10, 10b) nach einem der Ansprüche 1 bis 3, wobei
die Signalübertragungseinheit (240) als Steuersignal (AS) mindestens entweder ein Signal zum Erhöhen einer Lichtmenge, die von dem spezifizierten sich bewegenden Objekt emittiert wird, oder ein Signal zum Erhöhen einer Lautstärke, die von dem spezifizierten sich bewegenden Objekt emittiert wird, überträgt.

5. System (10; 10b) nach einem der Ansprüche 1 bis 4, wobei
der Sensor zur Fernsteuerung aus einer Kamera (302; 302a; 302b; 302c) besteht, die ein Bild aufnimmt, das zum Bestimmen des Standorts von jedem Objekt der Vielzahl der sich bewegenden Objekte verwendet wird.

6. System (10; 10b) nach einem der Ansprüche 1 bis 5, wobei
die erste Erfassungseinheit (250) die Zielperson basierend auf dem von der Kamera (302; 302a; 302b; 302c) erfassten Bild (Pi) und einem Lernmodell (270), das gelernt hat, ob eine Person, die eine vorbestimmte Erfassungsbedingung erfüllt, in einem Eingangsbild vorhanden ist, erfasst.

7. System (10; 10b) nach einem der Ansprüche 1 bis 6, wobei
die Aufenthaltsortbestimmungseinheit (220) den Aufenthaltsort basierend auf dem Erfassungsresultat über die Zielperson und den Standortinformationen über den Sensor zur Fernsteuerung bestimmt.

8. System (10; 10b) nach einem der Ansprüche 1 bis 7, wobei
jedes sich bewegende Objekt ein Fahrzeug (100; 100a; 100b; 100c; 100d) ist, die Fernsteuerungseinheit (210) jedes sich bewegende Objekt veranlasst, zwischen einem ersten Ort (PL1) und einem zweiten Ort (PL2) in einem Werk (FC) zur Herstellung von jedem sich bewegenden Objekt zu fahren, indem sie die Fernsteuerung implementiert, und
ein erster Schritt, der sich auf die Herstellung von jedem sich bewegenden Objekt bezieht, an dem ersten Ort (PL1) und ein zweiter Schritt als ein auf den ersten Schritt folgender Schritt an dem zweiten Ort (PL2) durchgeführt wird.

9. System (10; 10b) nach Anspruch 2, wobei
wenn eine Zielperson nach Durchführen des Änderungsvorgangs von der zweiten Erfassungseinheit (170) nicht erfasst wird, die Zustandsänderungseinheit (180) einen Vorgang zum Freigeben eines Zustands durch, bei dem der Fahrzustand durch den Änderungsvorgang geändert wird.

10. Verfahren zum Steuern einer Vielzahl von sich bewegenden Objekten, das in einem System (10; 10b) implementiert ist, das die Vielzahl von sich bewegenden Objekten durch Fernsteuerung über einen Sensor zur Fernsteuerung bewegt, der für die Fernsteuerung und zum Bestimmen von Orten der Vielzahl von sich bewegenden Objekten verwendet wird, umfassend:
einen Schritt eines Erfassens einer Zielperson unter Verwendung einer ersten Erfassungseinheit (250), die an dem System (10; 10b) bereitgestellt ist, wobei die erste Erfassungseinheit (250) die Zielperson unter Verwendung des Sensors zur Fernsteuerung erfasst;
einen Schritt eines Bestimmens des Aufenthaltsortes der Zielperson basierend auf Erfassungsresultaten der Zielperson durch die erste Erfassungseinheit (250); einen Schritt eines Spezifizierens eines sich bewegenden Objekts der Vielzahl von sich bewegenden Objekten, die durch die Fernsteuerung gesteuert werden und sich der Zielperson wahrscheinlich nähern, basierend auf dem bestimmten Aufenthaltsort; und
einen Schritt des Änderns eines Fahrmodus des spezifizierten sich bewegenden Objekts in einen Warnmodus, um eine Warnung vor der Zielperson abzugeben.

## Revendications

1. Système (10 ; 10b), comprenant :
une pluralité d'objets en mouvement (100a à 100d) ;
une première unité de détection (250) ;
une unité de commande à distance (210) configurée pour déplacer la pluralité d'objets en mouvement par la mise en œuvre d'une commande à distance ;
une unité de détermination de localisation (220), l'unité de détermination de localisation (220) étant configurée, quand une première unité de détection (250) prévue dans le système (10 ; 10b) détecte une personne cible, pour déterminer une localisation de la personne cible sur la base des résultats de détection de la personne cible par la première unité de détection (250) ;
une unité de spécification d'objet en mouvement (230) configurée pour spécifier, dans la pluralité d'objets en mouvement, un objet en mouvement qui est commandé par la commande à distance et est susceptible de s'approcher de la personne cible sur la base de la localisation déterminée ;
une unité de transmission de signal (240) configurée pour transmettre un signal de commande (AS) à l'objet en mouvement spécifié, le signal de commande (AS) étant un signal pour changer un mode de conduite de l'objet en mouvement spécifié vers un mode d'alerte pour délivrer une alerte à la personne cible ;
**caractérisé en ce que** le système comprend en outre
un capteur pour une commande à distance utilisé pour la commande à distance et pour déterminer des emplacements de la pluralité d'objets en mouvement,
la première unité de détection (250) détectant la personne cible en utilisant le capteur pour la commande à distance.

2. Système (10, 10b) selon la revendication 1, dans lequel
l'objet en mouvement spécifié comprend une deuxième unité de détection (170) configurée pour détecter une situation autour de l'objet en mouvement spécifié ;
l'unité de transmission de signal (240) est configurée pour transmettre un signal destiné à augmenter la sensibilité de détection par la deuxième unité de détection en tant que signal de commande (AS) ;
l'objet en mouvement spécifié comprend une unité de changement d'état (180) configurée pour réaliser un processus de changement destiné à changer un état de conduite de l'objet en mouvement spécifié quand la deuxième unité de détection (170) détecte une personne cible, et
le processus de changement comprend au moins l'un quelconque d'un processus de réduction d'une vitesse de déplacement de l'objet en mouvement spécifié, d'un processus d'augmentation d'une quantité de lumière émise par l'objet en mouvement spécifié, et d'un processus d'augmentation d'un volume sonore émis par l'objet en mouvement spécifié.

3. Système (10, 10b) selon la revendication 1 ou 2, dans lequel
l'unité de transmission de signal (240) transmet un signal pour réduire une vitesse de déplacement de l'objet en mouvement spécifié en tant que signal de commande (AS).

4. Système (10, 10b) selon l'une quelconque des revendications 1 à 3, dans lequel
l'unité de transmission de signal (240) transmet au moins un signal pour augmenter une quantité de lumière émise par l'objet en mouvement spécifié ou bien un signal pour augmenter un volume sonore émis par l'objet en mouvement spécifié en tant que signal de commande (AS).

5. Système (10 ; 10b) selon l'une quelconque des revendications 1 à 4, dans lequel
le capteur pour la commande à distance se compose d'une caméra (302 ; 302a ; 302b ; 302c) qui capte une image utilisée pour déterminer l'emplacement de chaque objet de la pluralité d'objets en mouvement.

6. Système (10 ; 10b) selon l'une quelconque des revendications 1 à 5, dans lequel
la première unité de détection (250) détecte la personne cible sur la base de l'image captée (Pi) acquise par la caméra (302 ; 302a ; 302b ; 302c), et un modèle d'apprentissage (270) formé sur le fait qu'une personne remplissant une condition de détection prédéterminée est dans une image d'entrée.

7. Système (10 ; 10b) selon l'une quelconque des revendications 1 à 6, dans lequel
l'unité de détermination de localisation (220) détermine la localisation sur la base du résultat de détection concernant la personne cible et d'une information d'emplacement concernant le capteur pour la commande à distance.

8. Système (10 ; 10b) selon l'une quelconque des revendications 1 à 7, dans lequel
chaque objet en mouvement est un véhicule (100 ; 100a ; 100b ; 100c ; 100d),
l'unité de commande à distance (210) amène chaque objet en mouvement à se déplacer entre un premier endroit (PL1) et un deuxième endroit (PL2) dans une usine (FC) pour la fabrication de chaque objet en mouvement en mettant en œuvre la commande à distance, et
une première étape se rapportant à la fabrication de chaque objet en mouvement est réalisée au premier endroit (PL1) et une deuxième étape comme étape à la suite de la première étape est réalisée au deuxième endroit (PL2).

9. Système (10 ; 10b) selon la revendication 2, dans lequel
quand une personne cible devient non détectée par la deuxième unité de détection (170) après mise en œuvre du processus de changement, l'unité de changement d'état (180) réalise un processus de libération d'un état où l'état de conduite est changé par le processus de changement.

10. Procédé de commande d'une pluralité d'objets en mouvement mis en œuvre dans un système (10 ; 10b) qui déplace la pluralité d'objets en mouvement par commande à distance par l'intermédiaire d'un capteur pour une commande à distance utilisé pour la commande à distance et pour déterminer des emplacements de la pluralité d'objet en mouvement, comprenant :
une étape de détection d'une personne cible en utilisant une première unité de détection (250) prévue dans le système (10 ; 10b), la première unité de détection (250) détectant la personne cible en utilisant le capteur pour la commande à distance ;
une étape de détermination de la localisation de la personne cible sur la base des résultats de détection de la personne cible par la première unité de détection (250) ;
une étape de spécification d'un objet en mouvement dans la pluralité d'objets en mouvement qui est commandé par la commande à distance et susceptible de s'approcher de la personne cible sur la base de la localisation déterminée ; et
une étape de changement d'un mode de conduite de l'objet en mouvement spécifié vers un mode d'alerte pour délivrer une alerte à la personne cible.
